# FASCICULE DE BREVET EUROPEEN

(11) **EP 0 956 777 B1**
(45) Date de publication et mention de la délivrance du brevet: **13.04.2005**
(21) Numéro de dépôt: 99108293.4
(22) Date de dépôt: 28.04.1999
(51) Int. Cl.: A23G 9/28

(54) **Procédé et dispositif de moulage d'articles de confiserie glacée**
Verfahren und Einrichtung zum Formen von Speiseeis
Process and apparatus for moulding of ice-creams

(30) Priorité: 13.05.1998 EP 98201562
(43) Date de publication de la demande: 17.11.1999
(73) Titulaire: SOCIETE DES PRODUITS NESTLE S.A., 1800 Vevey (CH)
(72) Inventeur: Cathenaut, Philip Igor, 60000 Beauvais (FR); Delande, Bruno, 60690 Marseille en Beauvaisis (FR)
(74) Mandataire: Archambault, Jean

(56) Documents cités:
- EP-A- 0 213 709
- WO-A-89/05096
- WO-A-95/16134
- FR-A- 1 174 744
- FR-A- 2 564 525
- GB-A- 658 336
- GB-A- 992 262
- GB-A- 2 134 438
- GB-A- 2 230 057
- US-A- 1 685 460
- US-A- 1 693 988
- US-A- 1 801 578
- US-A- 2 136 224
- US-A- 3 166 025
- US-A- 4 566 612
- US-A- 5 172 835
- US-A- 5 464 120
- US-A- 5 718 354

## Description

L'invention a trait à un dispositif de moulage d'articles de confiserie glacée, notamment de bâtonnets glacés et un procédé de fabrication utilisant un tel dispositif.

Les bâtonnets de confiserie glacée sont fabriqués industriellement par moulage ou par extrusion.

Par extrusion, les produits sont fabriqués par découpe en tranches d'un boudin de consistance plastique, relativement dure à une température de l'ordre de - 6° C à - 7° C, extrudé verticalement à la sortie d'un freezer. L'extrusion confère aux produits une texture fine, moins cristallisée que celle des produits moulés. La texture fine obtenue par extrusion est due pour une bonne part aux conditions de congélation dans un freezer et en particulier à la température de glaçage en sortie du freezer. C'est à dire que plus la température est basse, plus faible est la quantité de gros cristaux formés. En effet, plus la vitesse de congélation est grande, plus les cristaux de glace sont petits et plus fine est la texture. Dans un freezer, la vitesse de congélation est maximale grâce au mélange et au raclage continuel de la paroi qui permettent une congélation accélérée de l'eau. Un inconvénient de cette méthode est que l'on est limité du point de vue de la forme des produits extrudés.

La congélation d'une composition à glacer liquide par moulage par simple conduction thermique dans un moule plongé dans une solution réfrigérante est plus lente et conduit à la formation de cristaux notablement plus gros. Dans ce procédé, la composition à glacer est toujours dosée à l'état liquide dans les moules, dans le but d'assurer un bon remplissage et d'éviter la création de poches d'air et sa température est de l'ordre de - 2° C à - 3° C. La proportion d'eau congelée est faible et l'essentiel de la congélation du produit a lieu dans les moules. Celà explique la présence d'une texture plus cristallisée moins fine par accroissement de la taille des cristaux.

Dans US-A-3632245, par exemple, on décrit un appareil de fabrication de bâtonnets glacés multi-pistes par moulage, dans lequel des rangées d'alvéoles sont simultanément remplies avec une quantité dosée de composition liquide à glacer à partir de trémies de distribution associées à des dispositifs de dosage volumétrique comprenant des cylindres constituant des chambres de dosage dans lesquelles le liquide est successivement aspiré, puis refoulé au moyen de pistons doseurs. Après ce remplissage, les alvéoles cheminent dans un liquide réfrigérant de manière à congeler les articles. Dans la mesure où la composition à glacer est liquide, la simple dépression créée par le déplacement du piston dans sa chambre permet le remplissage parfait des cylindres. Ainsi, le remplissage identique des cylindres permet le dosage simultané de volume identique dans les moules pour l'ensemble des pistes.

FR-A-1 174 744 divulgue un procédé de moulage de bâtonnets glacés sur pistes multiples à partir d'une crème fouettée maigre à haut foisonnement provenant d'un freezer dans lequel elle a été prédurcie, au moyen d'un dispositif de remplissage de moules comprenant un compartiment doseur ménagé dans un tambour basculant. Le compartiment doseur est traversé par un piston qui coulisse librement à l'intérieur sur toute sa longueur et est prolongé par une buse de dosage au droit d'une cavité de moulage des bâtonnets d'une table de congélation. Le remplissage des moules se fait par pression mécanique des pistons sur la colonne de composition glacée occupant la chambre de dosage, qui en est ainsi expulsée et au droit de laquelle un fil tranchant coupe une portion en forme de boudin.

Le but de l'invention est de mettre à disposition un dispositif de fabrication de produits moulés dont la qualité est semblable à celle que l'on obtenait précédemment pour des produits extrudés seulement.

L'invention concerne donc un dispositif de moulage de confiserie glacée par remplissage de contenants en défilement dans un environnement de solidification avec un volume prédéterminé de composition, le dit dispositif comprenant:
une trémie de distribution contenant la composition,
des moyens de dosage de la composition reliés à la trémie comprenant une chambre de dosage, un élément doseur, une buse de dosage et une soupape communiquant soit avec la trémie et la chambre de dosage pendant la phase d'aspiration, soit avec la chambre de dosage et la buse de dosage pendant la phase de remplissage,
caractérisé par le fait que la trémie est fermée et indéformable,
que le dispositif comprend des moyens de maintien d'une pression sur la composition pendant la phase d'aspiration de manière à remplir entièrement la chambre de dosage,
que la soupape tourne ou pivote dans un boisseau et
que la buse de dosage est mobile, de sorte qu'elle descende dans le contenant en débur de remplissage, remonte pendant le remplissage et ressorte du contenant en fin de remplissage.

L'invention concerne également un procédé de moulage de confiserie glacée utilisant le dispositif tel que décrit précédemment, dans lequel on remplit des contenants en défilement dans un environnement de solidification avec un volume prédéterminé de composition au moyen d'un doseur volumétrique relié à une trémie de distribution, le dit doseur comprenant une chambre de dosage qui est remplie de composition dans la phase d'aspiration et un élément doseur qui expulse le volume prédéterminé de composition de la chambre dans la phase de dosage,
caractérisé par le fait que l'on dose une composition dure en la maintenant sous pression en amont de l'élément doseur et que la dite trémie de distribution maintenue sous pression permet une alimentation en continu de la chambre de dosage de manière à remplir les moules sans formation de poches d'air.

Dans le contexte de l'invention, une composition dure est une glace pouvant être une crème glacée, une glace au lait, une glace à l'eau, foisonnée ou non et le terme "glace" employé ci-après désignera indiféremment ces compositions. Une telle glace dure est à - 6° C, - 7° C et en pratique sort d'un freezer. Sa texture est plus ferme qu'une composition liquide à glacer habituelle et elle a un pourcentage d'eau congelée par rapport à l'eau totale de la recette de 50 % ou plus, notamment de 50 à 70 % selon la composition du mélange à congeler. Une telle glace peut contenir des inclusions telles que, par exemple, des morceaux de fruits, secs ou confits, de gel, de fondant, de croquant, de sauce, de caramel, de chocolat ou de biscuits.

Le dispositif selon l'invention peut être appliqué à toute machine de congélation d'articles de confiserie glacée telle que, par exemple:
Une machine de congélation en saumure, rectiligne, rotative, ovale ou en mouvement carré,
Une machine de congélation utilisant un fluide frigorigène liquide, gazeux ou en évaporation, qui baigne les moules ou les asperge pendant plus ou moins longtemps,
Une machine dans laquelle les moules sont transportés par un convoyeur dans un tunnel à air pulsé assurant la surgélation, le convoyeur pouvant être rectiligne ou s'enrouler, par exemple en simple ou en double hélice, applatie ou de révolution,
Toute machine de type précédent dans laquelle le déplacement des moules est continu ou pas à pas.

Le dispositif selon l'invention peut être appliqué d'une manière très simple aux machines existantes en transformant les doseuses de manière à créer une surpression dans la trémie de dosage, par exemple en la fermant par un couvercle, en la rendant étanche aux gaz et en la reliant à une source de fluide, notamment de gaz comprimé, par exemple d'air comprimé. Ce principe du dosage sous pression peut s'appliquer à différents types de doseuses tels que, par exemple les doseuses à boisseau de distribution et à cylindres verticaux ou horizontaux, les doseuses à soupapes ou les doseuses à buses plongeantes du type "bottom-up filler" et "pencil filler".

L'invention sera décrite plus en détails à titre d'illustration à l'aide des dessins annexés dans lesquels:
La figure 1 est une vue schématique du dispositif en phase de remplissage de la chambre de dosage,
La figure 2 est une vue schématique du dispositif de la figure 1 en phase de remplissage d'un moule,
La figure 3 est une vue schématique d'une variante du dispositif juste avant le remplissage d'un moule,
La figure 4 est une vue schématique partielle du dispositif de la figure 3 juste après le remplissage d'un moule.

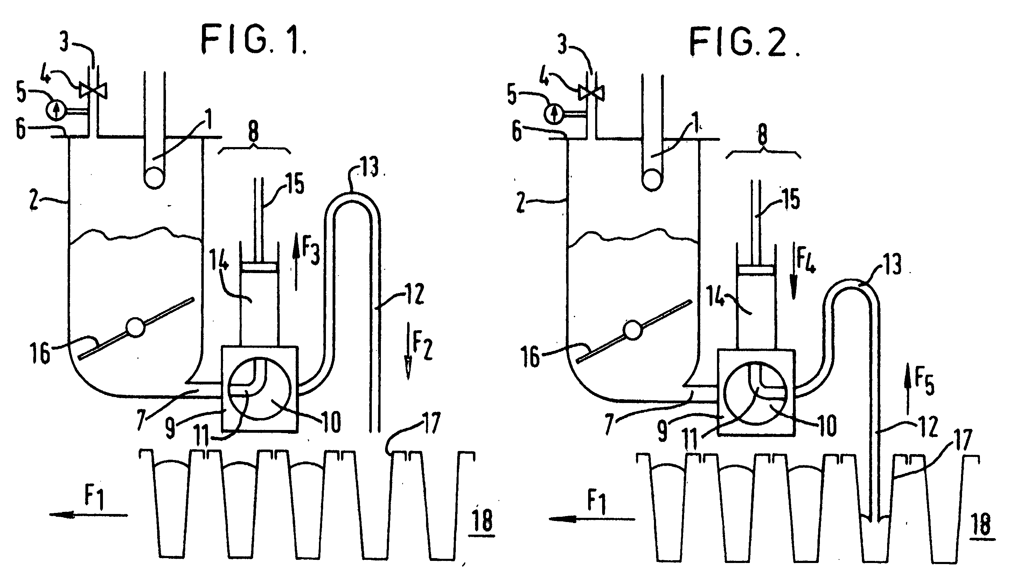

Aux figures 1 et 2, une conduite 1, reliée de côté à la trémie 2, alimente celle-ci en glace à - 6° C, - 7° C sortant d'un freezer. Une conduite 3 amène de l'air comprimé dans la trémie 2 de manière à la mettre sous une pression de 1,5 - 2 bar. La pression dans la trémie est réglée par une vanne 4 et contrôlée par un manomètre 5. La trémie 2 est fermée par un couvercle 6 et l'ensemble trémie/couvercle est indéformable et de préférence étanche aux gaz. L'ensemble trémie/couvercle peut être, de préférence, thermostaté. Au bas de la trémie 2, une conduite 7 délivre la glace au doseur volumétrique 8 comprenant un corps creux 9 ou boisseau dans lequel une soupape cylindrique 10, percée par autant de passages 11 qu'il y a de pistes de dosage (pour des raisons de clarté une seule piste est représentée), permet la communication, soit avec la trémie 2, soit avec la buse de dosage 12 par l'entremise du tuyau souple renforcé 13, en basculant d'1/4 de tour. Le doseur 8 comprend une chambre de dosage 14 et un piston doseur 15. La soupape rotative 10 peut être remplacée par un jeu de vannes à double sièges rempissant la même fonction mais rendant le doseur plus encombrant. Un mélangeur 16 assure le gavage de la conduite 7 communiquant avec le boisseau 9. La buse 12 est fixée sur un support monte et baisse (non représenté) permettant de la descendre dans le moule 17 et de la remonter en dehors du moule 17. Les moules 17 sont refroidis avant et /ou après leur remplissage par un vecteur réfrigérant. Le moulage peut s'appliquer à tout moule en une ou plusieurs parties en contact avec toute ambiance réfrigérante liquide, gazeuse ou solide telle que, par exemple la saumure, une solution d'eau glycolée, de l'air pulsé, de l'azote liquide, de la neige carbonique. La buse 12 peut également être fixée sous une soupape (non représentée) qui, par sa fermeture juste après dosage empêche que la glace soit surdosée ou qu'elle goutte en raison du volume résiduel contenu dans le tuyau souple 13.

A la figure 1, en situation de production, un moule 17 vide, en défilement pas à pas sur une chaîne 18 dans la direction de la flèche f1 se présente sous la buse 12. Celle-ci est descendue au fond du moule 17 selon f2 cependant que le cylindre 14 constituant la chambre de dosage est rempli de composition poussée depuis la trémie 2 par l'air comprimé à travers la conduite 7, puis le passage 11 de la soupape 10 et que le piston 15 remonte selon f3.

Comme indiqué à la figure 2, la soupape 10 bascule d'1/4 de tour, ce qui met le cylindre 14 en communication avec la conduite 13 par l'entremise du passage 11. Le piston 15 descend selon f4 et le volume exact de glace contenu dans le cylindre 14 remplit le moule 17 par la buse 12 qui remonte progressivement selon f5 en accompagnant le remplissage.

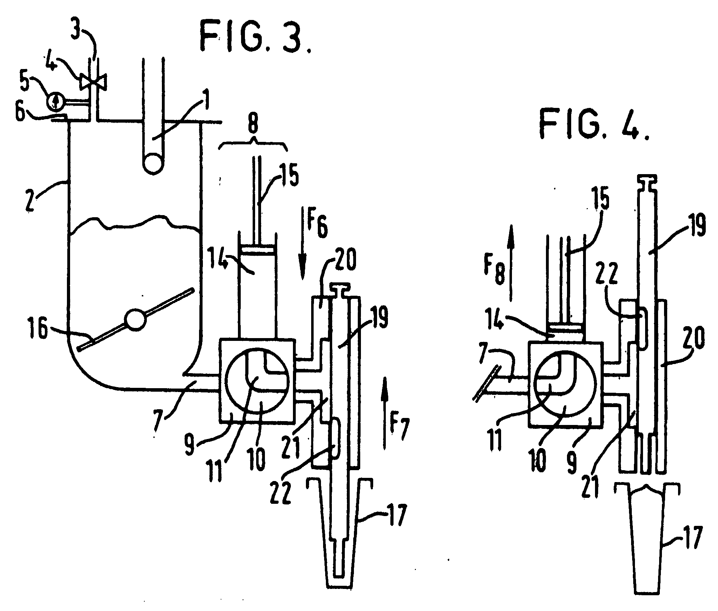

Aux figures 3 et 4, le principe de dosage est le même que précédemment, sauf que la buse 19 coulisse dans un distributeur 20 solidaire du boisseau 9.

A la figure 3, le cylindre 14 a été rempli de glace et celle-ci est dosée par la descente du piston 15 selon f6, à travers le canal 11 et la fenêtre 21 ménagée dans le corps du distributeur 20, communiquant avec la fenêtre 22 de la buse 19 se présentant au fond du moule 17. La buse 19 est actionnée par un vérin pneumatique (non représenté) qui la remonte progressivement selon f7 lors du remplissage.

Après remplissage du moule 17, comme montré à la figure 4, la soupape 10 tourne de 3/4 de tour, ce qui met le cylindre 14 en communication avec la conduite 7 reliée à la trémie par l'entremise du passage 11. Le piston 15 est alors en position prêt à aspirer et remonte selon f8.

Dans ce cas, les volumes morts sont réduits à leur minimum et la soupape 10 est synchronisée avec la descente et la remontée de la buse au moyen d'un programme automatique.

Selon une variante de fonctionnement, on peut prévoir que la buse reste fixe et que le moule soit pris par un dispositif monte et baisse, c'est à dire qu'il soit monté en début de remplissage, puis descendu progressivement lors du remplissage.

Dans une forme d'exécution particulièrement adaptée à une ligne de fabrication multi-pistes non représentée pour des raisons de simplification, la trémie telle que 2, commune à l'ensemble des pistes a une forme généralement cylindrique, est disposée horizontalement transversalement aux pistes, possède deux conduites d'amenée de glace telles que 1 disposées de chaque côté du cylindre et des conduites de sortie de la glace telles que 7 disposées en face de chaque piste. Un agitateur/répartiteur tel que 16 comprend un axe de rotation positionné dans l'axe du cylindre et des palettes fixées transversalement au dit axe de l'agitateur, de part et d'autre du dit axe dans une position en quinconce les unes par rapport aux autres. Les palettes sont disposées de manière décalée par rapport aux conduites de sortie de la glace, en face des espaces situés de part et d'autre des dites conduites de sortie. Les palettes ont de préférence une longeur telle que leur extrémité soit à proximité de la paroi interne du cylindre, une forme en hélice et une orientation avec un angle de moins en moins prononcé lorsque l'on se rapproche de la partie centrale du cylindre, permettant de diriger préférentiellement les flux de glace provenant des conduites d'amenée vers la partie centrale du cylindre de manière à compenser les flux préférentiels vers les extrémités. Ainsi, la glace est répartie de manière homogène entre les différentes conduites de sortie et peut gaver les chambres de dosage, sans création de poche d'air.

En fonctionnement, l'agitateur répartiteur est actionné en rotation lente par un moteur extérieur à la trémie en prise sur l'axe de l'agitateur, par exemple un moteur pneumatique et l'étanchéité peut être assurée, par exemple par un joint à lèvres du côté du moteur et par un presse étoupe de l'autre côté du cylindre. La trémie est alimentée en continu. Si le niveau de glace s'élève dans la trémie, la pression d'air augmente dans sa partie supérieure. Cette augmentation de pression, comparée à une valeur de consigne peut générer un signal qui agit sur la fermeture d'une vanne telle que 4 ou sur la réduction de la vitesse de la pompe d'alimentation en produit venant du freezer de manière à diminuer son débit.

Un avantage important de la trémie cylindrique ci-dessus est que, de par sa géométrie, elle peut être nettoyée par des agents chimiques et le cas échéant stérilisée, par exemple à l'eau chaude ou à la vapeur en continu en place, sans démontage.

Les avantages apportés par le procédé et le dispositif par rapport aux moyens de moulage traditionnels sont multiples:
On peut doser la glace qui contient beaucoup plus d'eau à l'état congelé que traditionnellement avec une amélioration correspondante de la texture qui est celle que l'on ne trouve habituellement que dans les articles extrudés, quelque soit la teneur en matière grasse.
Le temps de congélation peut être réduit de 30 à 50 %, ce qui permet une plus grande cadence et une meilleure productivité de la ligne.
La viscosité de la glace est telle que les inclusions qu'elle contient le cas échéant peuvent être réparties de manière uniforme sans décanter comme dans le cas d'une glace dosée liquide.
On peut fabriquer des articles composites en dosant la glace au moyen d'une buse de chemisage, de manière à former une coque qui reste en place sur la paroi du moule, et remplir ensuite le centre de manière à former un noyau de confiserie glacée de nature différente produisant un contraste de texture et/ou de goût.
On peut fabriquer des articles dits "tridimentionnels" ou "indémoulables" en utilisant des moules en plusieurs parties.
Les articles, en étant plus froids, peuvent être plus facilement enrobés, par exemple d'une couverture de composition grasse, d'une glace à l'eau, d'un sorbet ou d'une émulsion.

Le dispositif et le procédé ont été décrits en liaison avec la fabrication de sucettes glacées. Us peuvent bien entendu être utilisés pour fabriquer d'autres articles moulés tels que, par exemple des cônes ou des pots. Le dispositif a été décrit en référence aux dessins en liaison avec une piste de dosage pour des raisons de simplification. Bien entendu, une machine en situation des fabrication peut comprendre jusqu'à 20 pistes de dosage en parallèle.

## Revendications

1. Dipositif de moulage de confiserie glacée par remplissage de contenants en défilement dans un environnement de solidification avec un volume prédéterminé de composition, le dit dispositif comprenant:
une trémie de distribution contenant la composition,
des moyens de dosage de la composition reliés à la trémie comprenant une chambre de dosage, un élément doseur, une buse de dosage et une soupape communiquant soit avec la trémie et la chambre de dosage pendant la phase d'aspiration, soit avec la chambre de dosage et la buse de dosage pendant la phase de remplissage,
**caractérisé par le fait que** la trémie est fermée et indéformable,
que le dispositif comprend des moyens de maintien d'une pression sur la composition pendant la phase d'aspiration de manière à remplir entièrement la chambre de dosage,
que la soupape tourne ou pivote dans un boisseau et
que la buse de dosage est mobile par rapport aux autres éléments du dispositif, de sorte qu'elle descende dans le contenant en débur de remplissage, remonte pendant le remplissage et ressorte du contenant en fin de remplissage.

2. Dispositif selon la revendication 1, **caractérisé par le fait que** la trémie est fermée par un couvercle et que l'ensemble trémie/couvercle est indéformable, étanche aux gaz et thermostaté.

3. Dispositif selon la revendication 1, **caractérisé par le fait que** la buse de dosage est reliée à la soupape par un tuyau souple et qu'elle est solidaire d'un support monte et baisse, de sorte qu'elle descende dans le contenant en début de remplissage, remonte pendant le remplissage et ressorte du contenant en fin de remplissage.

4. Dispositif selon la revendication 1, **caractérisé par le fait que** la soupape tourne ou pivote dans un boisseau et que la buse de dosage coulisse dans un distributeur solidaire du boisseau, de sorte qu'elle descende dans le contenant en début de remplissage, remonte pendant le remplissage et ressorte du contenant en fin de remplissage.

5. Dispositif selon la revendication 1, adapté au dosage de glace en parallèle selon plusieurs pistes, **caractérisé par le fait que** la trémie est de forme générale cylindrique, qu'elle est indéformable, étanche aux gaz et thermostatée et qu'elle comprend des moyens de gavage homogène des chambres de dosage avec la glace sans formation de poches d'air, notamment un agitateur/répartiteur à palettes orientées.

6. Procédé de moulage de confiserie glacée utilisant le dispositif tel que décrit dans l'une des revendications 1 à 5, dans lequel on remplit des contenants en défilement dans un environnement de solidification avec un volume prédéterminé de composition au moyen d'un doseur volumétrique relié à une trémie de distribution, le dit doseur comprenant une chambre de dosage qui est remplie de composition dâns la phase d'aspiration et un élément doseur qui expulse le volume prédéterminé de composition de la chambre dans la phase de dosage,
**caractérisé par le fait que** l'on dose une composition dure en la maintenant sous pression en amont de l'élément doseur et que la dite trémie de distribution maintenue sous pression permet une alimentation en continu de la chambre de dosage de manière à remplir les moules sans formation de poches d'air.

7. Procédé selon la revendication 6, **caractérisé par le fait que** la composition dure est une glace à -6°C, -7° C de texture plus ferme qu'une composition liquide à glacer traditionnelle et qu'elle a un pourcentage d'eau congelée par rapport à l'eau totale de la recette de 50 % ou plus, notamment de 50 à 70 % selon la composition du mélange à congeler.

8. Procédé selon la revendication 6, **caractérisé par le fait que** la glace contient des inclusions, notamment des morceaux de fruits, secs ou confits, de gel, de fondant, de croquant, de sauce, de caramel, de chocolat ou de biscuits.

9. Procédé selon la revendication 6, **caractérisé par le fait que** la glace est introduite dans la chambre de dosage sous une pression de gaz, notamment d'air de 1,5 à 2 bar.

## Patentansprüche

1. Einrichtung zum Formen von Eissüßwaren durch Befüllen von Behältnissen, die hintereinander durch eine Erstarrungsumgebung laufen, mit einer vorbestimmten Menge einer Zusammensetzung, wobei diese Einrichtung aufweist:
- einen Beschickungsbehälter, der die Zusammensetzung enthält,
- Mittel zum Dosieren der Zusammensetzung, die mit dem Beschickungsbehälter verbunden sind und eine Dosierkammer, ein Dosierelement, eine Dosierdüse und ein Ventil, das in der Ansaugphase mit dem Beschickungsbehälter und der Dosierkammer kommuniziert und in der Befüllphase mit der Dosierkammer und der Dosierdüse kommuniziert, umfassen,
**dadurch gekennzeichnet,**
**dass** der Beschickungsbehälter geschlossen und nicht verformbar ist, dass die Einrichtung Mittel zur Ausübung eines Drucks auf die Zusammensetzung in der Ansaugphase umfasst, so dass die Dosierkammer vollständig gefüllt wird, dass sich das Ventil in einer Hülse dreht oder schwenkt, und dass die Dosierdüse gegenüber den anderen Elementen der Einrichtung dergestalt beweglich ist, dass sie zu Beginn des Befüllens in dem Behältnis absinkt, während des Befüllens ansteigt und am Ende des Befüllens aus dem Behältnis herausragt.

2. Einrichtung nach Anspruch 1,
**dadurch gekennzeichnet,**
**dass** der Beschickungsbehälter durch einen Deckel verschlossen ist und dass die Gesamtanordnung Beschickungsbehälter/Deckel nicht verformbar ist, gasdicht ist und mit einem Thermostat versehen ist.

3. Einrichtung nach Anspruch 1,
**dadurch gekennzeichnet,**
**dass** die Dosierdüse durch einen Schlauch mit dem Ventil verbunden ist und dass sie mit einer sich aufwärts und abwärts bewegenden Halterung fest verbunden ist, so dass sie zu Beginn des Befüllens in dem Behältnis absinkt, während des Befüllens wieder ansteigt und am Ende des Befüllens aus dem Behältnis herausragt.

4. Einrichtung nach Anspruch 1,
**dadurch gekennzeichnet,**
**dass** sich das Ventil in einer Hülse dreht oder schwenkt, und dass die Dosierdüse in einem mit der Hülse fest verbundenen Verteiler gleitet, so dass sie zu Beginn des Befüllens in dem Behältnis absinkt, während des Befüllens ansteigt und am Ende des Befüllens aus dem Behältnis herausragt.

5. Einrichtung nach Anspruch 1, die sich zum Dosieren von Speiseeis auf mehreren Bahnen parallel eignet,
**dadurch gekennzeichnet,**
**dass** der Beschickungsbehälter von allgemein zylindrischer Form ist, dass er nicht verformbar ist, gasdicht und mit einem Thermostat versehen ist, und dass er Mittel zum homogenen Beschicken der Dosierkammer mit dem Eis ohne Lufteinschlüsse aufweist, insbesondere einen Rührer/Mixer mit ausgerichteten Schaufeln.

6. Verfahren zum Formen von Eissüßwaren unter Verwendung der Einrichtung wie in einer der Ansprüche 1 bis 5 beschrieben, bei dem in einer Erstarrungsumgebung hintereinander vorbeilaufende Behältnisse mittels eines volumetrischen Dosierers, der mit einem Beschickungsbehälter verbunden ist, mit einer vorbestimmten Menge einer Zusammensetzung befüllt werden, wobei dieser Dosierer eine Dosierkammer aufweist, die die Zusammensetzung umfasst, so dass die Dosierkammer in der Ansaugphase mit der Zusammensetzung gefüllt wird, und ein Dosierelement aufweist, das in der Dosierphase die vorbestimmte Menge der Zusammensetzung aus der Kammer ausstößt,
**dadurch gekennzeichnet,**
**dass** eine harte Zusammensetzung dosiert wird, indem sie vor dem Dosierelement unter Druck gehalten wird, und dass der genannte, unter Druck gehaltene Beschickungsbehälter ein kontinuierliches Speisen der Dosierkammer ermöglicht, so dass die Formen ohne Entstehung von Lufteinschlüssen gefüllt werden können.

7. Verfahren nach Anspruch 6,
**dadurch gekennzeichnet,**
**dass** die harte Zusammensetzung ein Speiseeis bei -6 °C, -7 °C und mit einer festeren Konsistenz als eine herkömmliche zu gefrierende flüssige Zusammensetzung ist, und dass sie gegenüber dem gesamten Wasser des Rezepts einen Prozentsatz von gefrorenem Wasser von 50 % oder mehr aufweist, insbesondere von 50 bis 70 %, je nach der Zusammensetzung des zu gefrierenden Gemischs.

8. Verfahren nach Anspruch 6,
**dadurch gekennzeichnet,**
**dass** das Eis Einschlüsse, insbesondere von Fruchtstücken aus Trockenobst oder eingemachten Früchten, von Gel, von Fondantmasse, von Gebäck, von Sauce, von Karamell, von Schokolade oder von Biskuits aufweist.

9. Verfahren nach Anspruch 6,
**dadurch gekennzeichnet,**
**dass** das Eis unter einem Gasdruck, insbesondere einem Luftdruck von 1,5 bis 2 Bar in die Dosierkammer eingeführt wird.

## Claims

1. Device for moulding frozen confectionery by filling containers, passing in-line through a solidifying environment, with a predetermined volume of composition, the said device comprising:
a distributing hopper containing the composition,
means for metering the composition connected to the hopper comprising a metering chamber, a metering element, a metering nozzle and a valve communicating either with the hopper and the metering chamber during the suction phase or with the metering chamber and the metering nozzle during the filling phase,
**characterized in that** the hopper is closed and cannot be deformed,
that the device includes means for maintaining pressure over the composition during the suction phase so as to fill the metering chamber completely,
that the valve turns or pivots in a valve body and the metering nozzle is movable in relation to the other elements of the device so that it descends into the container at the start of filling, rises during filling and leaves the container at the end of filling.

2. Device according to claim 1, **characterized in that** the hopper is closed by a lid and the hopper/lid assembly cannot be deformed, is leakproof to gases and is thermally insulated.

3. Device according to claim 1, **characterized in that** the metering nozzle is connected to the valve by a flexible hose and **in that** it is secured to a raising and lowering support, so that it descends into the container at the start of filling, rises during filling and leaves the container at the end of filling.

4. Device according to claim 1, **characterized in that** the valve turns or pivots in a valve body and the metering nozzle slides inside a distributor secured to the valve body so that it descends into the container at the start of filling, rises during the filling and leaves the container at the end of filling.

5. Device according to claim 1, adapted for metering ice-cream in parallel along several tracks, **characterized in that** the hopper has a generally cylindrical shape, it cannot be deformed, it is leakproof to gases and is thermally insulated and it includes means for uniformly force-feeding the metering chambers with ice-cream without the formation of air pockets, in particular a stirrer/distributor with angled blades.

6. Process for moulding frozen confectionery using the device as described in one of claims 1 to 5, wherein the containers passing in line through a solidifying environment are filled with a predetermined volume of composition by means of a volumetric metering device connected to a distributing hopper, the said metering device comprising a metering chamber that is filled with the composition in the suction phase and a metering element that expels the predetermined volume of composition from the chamber in the metering phase,
**characterized in that** a hard composition is metered under pressure upstream to the metering element and **in that** the said distributing hopper, maintained under pressure, enables the metering chamber to be supplied continuously so as to fill the moulds without the formation of air pockets.

7. Process according to claim 6, **characterized in that** the hard composition is an ice-cream at -6°C to -7°C with a firmer texture than that of a traditional liquid composition to be frozen and **in that** it has a percentage of frozen water in relation to the total water of the recipe of 50% of more, in particular 50 to 70% according to the composition of the mixture to be frozen.

8. Process according to claim 6, **characterized in that** the ice-cream contains inclusions, in particular pieces of dried or candied fruits, jelly, fondant, crisp material, sauce, caramel, chocolate or biscuits.

9. Process according to claim 6, **characterized in that** the ice is introduced into the metering chamber under gas pressure, in particular air at 1.5 to 2 bar.
